# EUROPÄISCHE PATENTANMELDUNG

(11) **EP 0 622 519 A1**
(43) Veröffentlichungstag der Anmeldung: **02.11.1994**
(21) Anmeldenummer: 94105928.9
(22) Anmeldetag: 16.04.1994
(51) Int. Cl.: E21B 7/04, G01C 15/00

(54) **Ferngesteuerter Erdvortriebskörper**

(30) Priorität: 29.04.1993 DE 4314102
(71) Anmelder: Daimler-Benz Aerospace Aktiengesellschaft, D-81663 München (DE)
(72) Erfinder: Mayer, Thomas, Dipl.-Ing., D-81549 München (DE); Kaltschmidt, Horst, Dipl.-Ing. Prof. Dr., D-85579 Neubiberg (DE)

(57) **Zusammenfassung**

Die Erfindung bezieht sich auf ein Verfahren zum Fernsteuern eines Erdvortriebskörpers, bei dem die Messung der Position und Richtung beim Start von den beim Start auftretenden Kräften entkoppelt ist und hierdurch die Feststellung von Startposition und -richtung mit großer Genauigkeit ermöglicht und die Steuerung des Vortriebskörpers mit der notwendigen Referenz versehen wird.

## Beschreibung

Die Erfindung bezieht sich auf ein Verfahren zum Fernsteuern eines Erdvortriebskörpers mit einer Startvorrichtung und einem druckluft- oder elektrisch betriebenen Vortriebsantrieb gemäß dem Oberbegriff des Anspruchs 1.

Zum rationellen Verlegen von Kabeln und Rohrleitungen werden unter dem Sammelbegriff "grabenloses Bauen" sogenannte "Erdraketen" eingesetzt. Typischerweise erfolgt der Vortrieb derartiger Geräte mit Hilfe druckluft- bzw. elektrisch betriebener Vorrichtungen, die mit etwa zehn Schlägen pro Sekunde eine bodenabhängige Vortriebsgeschwindigkeit von ca. 10 m/h erzielen.

Weiterhin zählt es zum Stand der Technik, die Wirkrichtung solcher Vortriebskörper zu beeinflussen und die Lagekoordinaten und den Gechwindigkeitsvektor desselben in Echtzeit zu erfassen, wobei dann die Steuerung durch die Feststellung der Positionsveränderung erfolgt, so daß sich der Bahnverlauf der Erdrakete ergibt. Der Endpunkt der Bahn und damit die Position der Erdrakete ist aber ganz wesentlich abhängig von der Genauigkeit der Ausrichtung derselben bei ihrem Start. Abweichungen von nur ein bis zwei mrad von der geplanten Startrichtung führen schon zu ganz erheblichen Abweichungen im Ziel.

Die Ausrichtung einer Erdrakete beim Start mit einer Genauigkeit von weniger als einem mrad ist bis heute nur theoretisch möglich, denn hierfür würde eine aufwendige, sehr stabile Startvorrichtung benötigt. Diese müßte ihrerseits selbst mit hoher Genauigkeit positioniert und fixiert werden, was aber den wahren Gegebenheiten eines normal groben Baustellenbetriebes absolut widerspricht. Allein schon die undefinierte Geometrie des Startschachts lassen derartige Genauigkeiten nicht zu, ganz abgesehen von der generell verminderten Sorgfalt und Qualifikation des Baustellenpersonals.

Der Erfindung liegt die Aufgabe zugrunde, eine Startvorrichtung der eingangs genannten Art zu schaffen, mit der eine einfache, robuste jedoch genaue Feststellung der Anfangsposition und Wirkrichtung des Vortriebskörpers mit laufender exakter Positionsbestimmung ermöglicht wird.

Diese Aufgabe wird durch die im Anspruch 1 aufgezeigten Maßnahmen gelöst. In den Unteransprüchen sind Ausgestaltungen und Weiterbildungen aufgezeigt und in der nachfolgenden Beschreibung ist ein Ausführungsbeispiel erläutert und die Figuren der Zeichnung ergänzen diese Erläuterungen. Es zeigen:
- Fig. 1: ein Schemabild der Situation vor dem Start einer Erdrakete bei einer normalen Baustelle,
- Fig. 2: ein Schemabild eines Ausführungsbeispiel nach dem Start der Erdrakete zur Messung der Winkelabweichung,
- Fig.3: eine schematisch gezeichnete Draufsicht gemäß Fig. 2 mit der beim Start erfolgten Winkelabweichung.

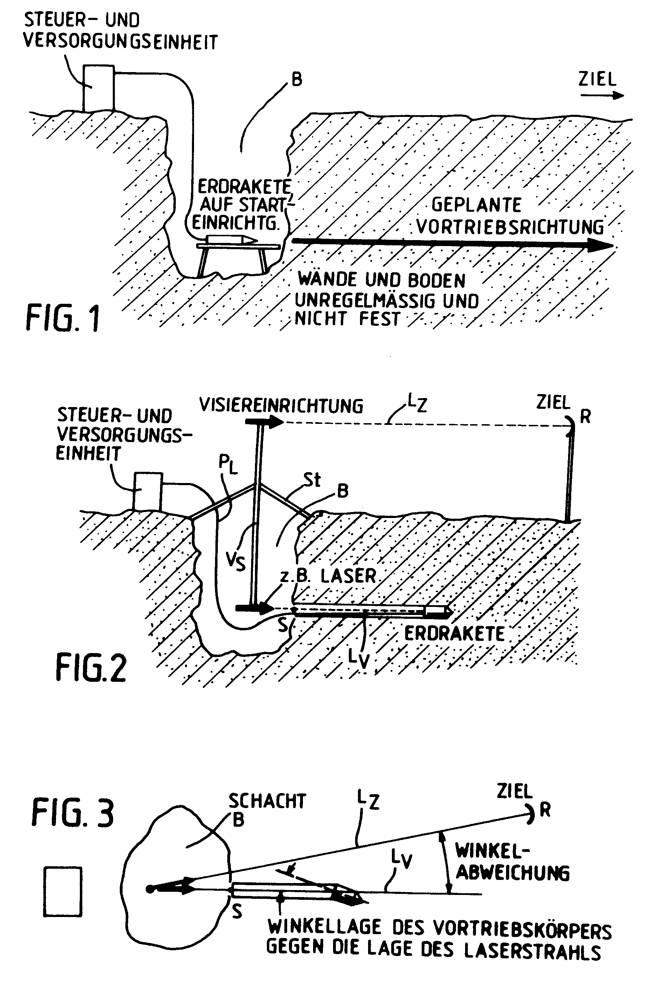

Nachfolgend wird anhand der Fig. 1 und 2 ein Ausführungsbeispiel erläutert, mit dem die gestellte Aufgabe lösbar ist. Hierzu wird verfahrensmäßig in der sogenannten Startgrube die Erdrakete grob in der geplanten Vortriebsrichtung ausgerichtet und gestartet. Nachdem sie sich etwa 5 m vorgearbeitet hat und noch eine direkte Sichtverbindung zwischen dem Startpunkt S und dem Vortriebskörper bzw. der Erdrakete besteht, wird ein Referenzpunkt R festgelegt, eine Linie L_{z} zwischen diesem Referenzpunkt und dem Ziel und eine solche Lᵥ zwischen dem Referenzpunkt und der Erdrakete bestimmt, der Winkel den beide Linien einschließen gemessen und ebenso die Länge des bereits erfolgten Vortriebs der Erdrakete. Alle diese Werte gehen der Steuer- und Versorgungseinheit ein, deren elektronische Auswerteinheit die so erhaltene Ist-Bahnlinie mit der von der Steuerung autonom erhaltenen Soll-Bahnlinie korreliert. Die beiden Linien L_{z} und Lᵥ werden mit bekannten Technologien mit einer Genauigkeit von jeweils Bruchteilen von mrad gemessen. Dadurch wird die Startposition der Erdrakete mit hoher Genauigkeit ermittelt, ohne daß eine schwere, aufwendige Startvorrichtung erforderlich ist und so fest verankert und fixiert werden muß, daß sie trotz der Erschütterungen durch den Betrieb der Erdrakete ihre Position beibehält. Die Lagefehler in dem vorgeschlagenen Verfahren hängen entscheidend von der Startreferenzrichtung ab. Deshalb ist zu empfehlen, am Heck des Vortriebskörpers bzw. dessen Sensors eine positionsempfindliche Fotodiodeneinrichtung, beispielsweise einen 4-Quadranten-Detektor, anzuordnen.

Prinzipiell genügt es jedoch, die von der Erdrakete ermittelte Bahnlinie Lᵥ an den von der Startvorrichtung ermittelten Startpunkt S unter dem errechneten Winkel anzubinden. Nun wird in weiterer Ausgestaltung der Erfindung vorgeschlagen, daß zur Verhinderung von in den bisher geschaffenen Tunnel abbröckelndem Erdreich und damit einer möglichen Unterbrechung der direkten Sichtverbindung zwischen dem Startpunkt und der Erdrakete, einen gegen äußere Druckeinflüsse unempindlichen Schlauch - beispielsweise ein Balgschlauch - von entsprechender Länge am Raketenende anzuordnen, der während des Vortriebs automatisch mitgezogen wird.

Zur Festlegung des Referenzpunktes R wird beispielsweise vorgeschlagen (siehe Figur 2) auf einem über der Grube abgestützten Stativ St, welches eine exakt vertikal ausgerichtete drehbare Säule Vₛ aufnimmt, welche an ihrem oberen Ende eine Visiereinrichtung und an ihrem unteren Ende einen Laser oder eine mm-Welleneinrichtung trägt. Die Visiereinrichtung, Theodolit, Goniometer etc., wird auf das Ziel eingestellt und somit ist die Ziellinie L_{z} als Referenzlinie festgelegt. Die Stativsäule Vₛ steht, wie bereits erwähnt, exakt senkrecht, Visiereinrichtung oben und Lichtquelle (Laser etc.) unten sind getrennt und voneinander unabhängig in der Horizontalebene drehbar angeordnet. Der Laser wird nach der Festlegung der Ziellinie um die vertikale Achse gedreht, bis er auf das Heck der Erdrakete zeigt, in einem Ausführungsbeispiel also auf einen 4-Quadrantendetektor trifft. Der Winkel, den Visier- oder Ziellinie und Vortriebslinie bzw. Laserstrahlrichtung einschließen, kann gegebenenfalls direkt abgelesen werden oder er wird wertmäßig der elektronischen Auswerteinheit bzw. dem Computer eingegeben.

Die vom Vortriebskörper bzw. der Erdrakete zurückgelegte Strecke wird über die Länge der abgespulten Versorgungsleitung P_{L} ermittelt und die Höhenabweichung über eine Flüssigkeitssäule. Durch die Entkopplung der Kräfte beim Start von den Meßwerten zu Position und Richtung wird ein Ausrichten und Fixieren der Startvorrichtung für einen Vortriebskörper erheblich vereinfacht, wobei diese Startvorrichtung selbst viel leichter und einfacher konzipierbar ist. Gleichzeitig wird der für die Steuerung des Vortriebskörpers wichtige "Fehler beim Start" ganz erheblich reduziert, die Genauigkeit zum Ziel also wesentlich optimiert. Die Steuerung des Vortriebskörpers hat nun eine zuverlässige Referenz erhalten.

## Patentansprüche

1. Verfahren zum Fernsteuern eines Erdvortriebskörpers mit einer Startvorrichtung und einem druckluft- oder elektrisch betriebenen Vortriebsantrieb sowie einer Steuerung durch Feststellung der Positionsänderungen, **dadurch gekennzeichnet**, daß
a) der Erdvortriebskörper (Erdrakete) grob in Zielrichtung positioniert und gestartet wird,
b) nach Erreichen einer gewissen Vortriebsstrecke, bei der eine Sichtverbindung zur Erdrakete gegeben ist, ein Referenzpunkt (R) festgelegt wird, gegebenenfalls unter einem Vortriebsstop,
c) die Strecke vom Referenzpunkt (R) zum Ziel bestimmt und wertmäßig einer Auswerteinheit der Steuer- und Versorgungseinheit eingegeben wird,
d) die Strecke zwischen Referenzpunkt (R) und Heck der Erdrakete bestimmt und wertmäßig der Auswerteinheit der Steuer- und Versorgungseinheit eingegeben wird,
e) der Winkel, der von beiden Strecken gebildet wird in der Auswerteinheit gebildet und zur Steuerungskorrektur herangezogen wird,
f) die bisher erfolgte Vortriebstiefe gemessen und der Auswerteinheit eingegeben wird und
g) die Lage (Winkel gegen Nordrichtung und gegen Horizontale) des Erdvortriebskörpers in bezug auf die Lage des Laserstrahls gemessen wird.

2. Erdvortriebskörper mit einer Startvorrichtung und einem druckluft- oder elektrisch betriebenen Vortriebsantrieb sowie einer Steuerung durch Feststellung der Positionsänderungen zur Durchführung des Verfahrens nach Anspruch 1, **dadurch gekennzeichnet**, daß zur Festlegung des Referenzpunktes (R) ein Stativ (St) über dem Bauschacht (B) errichtet wird, das eine exakt vertikal gestellte, in der Horizontal ebene drehbare Säule (V_{S}) aufnimmt, an deren oberen Ende eine Visiereinrichtung und deren unteren Ende eine Lichtstrahleinrichtung (Laser) angeordnet ist und beide Einrichtungen mit der Steuer- und Versorgungseinrichtung der Erdrakete elektronisch verbunden sind.

3. Erdvortriebskörper nach Anspruch 2, **dadurch gekennzeichnet**, daß er an seinem Heck mit einem Balgschlauch bestimmter Länge (beispielsweise 3m bis 5m) verbunden ist.

4. Erdvortriebskörper nach Anspruch 2 oder 3, **dadurch gekennzeichnet**, daß als Visiereinrichtung ein Theodolit, Goniometer oder Laserentfernungsmesser verwendet wird.

5. Erdvortriebskörper nach den Ansprüchen 2 bis 4, **dadurch gekennzeichnet**, daß zur Höhenabweichungsmessung eine Flüssigkeitssäule verwendet wird.

6. Erdvortriebskörper nach den Ansprüchen 2 bis 5, **dadurch gekennzeichnet,** daß an seiner Heckfläche ein Sensor mit positionsempfindlichen Fotodioden angeordnet ist.
